Europäisches Patentamt

European Patent Office

Office européen des brevets

(19)

(11) Publication number: **0 291 771**

A1

# EUROPEAN PATENT APPLICATION

(21) Application number: 88107189.8

(22) Date of filing: 05.05.88

(51) Int. Cl.4: **B60C 27/06**

(30) Priority: 15.05.87 IT 2054887
25.01.88 IT 1919788

(43) Date of publication of application:
23.11.88 Bulletin 88/47

(84) Designated Contracting States:
CH DE FR LI

(71) Applicant: MAGGI CATENE S.P.A.
Via Milano 2/4
I-22057 Olginate (COMO)(IT)

(72) Inventor: Maggi, Giuseppe
Via Virgilio 28
I-22053 Lecco(IT)

(74) Representative: Modiano, Guido et al
MODIANO, JOSIF, PISANTY & STAUB
Modiano & Associati Via Meravigli, 16
I-20123 Milan(IT)

(54) Snow-chain for wheels of motor vehicles.

(57) Anti-entanglement snow-chain having a known tensionable, open front chain loop and a rear open chain loop (2) including two at least partially rigid arc portions (2c,2a). One end (2f) of the first arc portion (2a) is hooked to a flattened box-like body (9) having an opening for removably hooking a head (12) rigidly associated with an end (2b) of the second arc portion (2c). The flattened box-like body (9) is furthermore hooked to at least one chain link crosspiece (1) intended to connect, together with the other equally spaced crosspieces, the front and rear loops of the chain. At the opposite end of said second arc portion, a tubular hook (5) with rotatable pivot (7) connects the second arc portion (2c) to the first arc portion (2a) and allows, after gripping and lifting the ends of the loop, the chain to be stretched in the vertical plane, to be rested on the tyre, and then to be hooked and tensioned without difficulty.

Fig.5

## SNOW-CHAIN FOR WHEELS OF MOTOR VEHICLES

The present invention relates to a snow-chain for tyre-fitted wheels of motor vehicles in general, provided with means for avoiding entanglement at fitting as well as with means for quick coupling terminal links of the lateral loop of chain rearward to the wheel.

Motorists and drivers of industrial vehicles are well aware of the practical difficulties encountered when snow-chains must be fitted, especially when the ground is snowy and sloping.

In the particular case of chains completely formed by links, i.e. with lateral loops, internal and external to the wheel, with mutually engageable links which are then tensionable with various systems such as eccentric levers or elastic ring and peripheral hooks, and with rhomboidal or single-portion crosspieces also made of links, a first difficulty arises when the chain is extracted from the generally box-like package, since the chain with open hook ends is tangled in such a manner as to require time and patience to unroll it onto the ground; without this preliminary operation of "laying", it is in fact impossible to position it around the wheel and then correctly connect, rearwardly, the hook of one end of the rear loop with the link of the other end, in order to allow the tensioning of the other lateral chain loop on the front part of the same wheel.

Another disadvantage is due to the difficulties in hooking an open hook, i.e. substantially an open link, in the shape of an U or the like, to a closed link, again rearwardly to the wheel, since this operation must allow said hook, when tensioning the front loop of the chain, to remain in flat position on the side of the tyre to prevent the end of the open hook from damaging said side.

Said difficulties and disadvantages are all the more felt when the chains have large dimensions and therefore considerable weight, and i.e. in the case of chains for wheels of industrial vehicles.

The aim of the present invention is therefore to provide a snow-chain, structured so as to prevent, in a straightforward manner, and without any particular attention and/or precaution, the undesirable entanglement of the chain after its extraction from its package, facilitating thereby its immediate positioning on the wheel and the related hooking of the ends of the rear chain loop to said wheel.

Another object of the invention is to provide a snow-chain partially made of links and partially made of rigid arcs, provided with means for hooking the ends of the rear chain loop such as to be easily and rapidly insertable, without the use of open hooks or the like and therefore also with the advantage of avoiding possible damages to the side of the tyre.

Not least object is to provide an anti-entanglement snow-chain with a cost practically equal to that of known chains made of links, packageable within conventional box-like bodies and without having dimensions greater than those of the chains currently available on the market.

This aim, as well as these and other objects which will become apparent hereinafter, are achieved by a snow-chain for wheels of motor vehicles, as defined in the appended claims.

The invention is now described hereinafter in great detail according to a preferred and non-exclusive embodiment thereof, with reference to the accompanying drawings, given only by way of non-limitative example, wherein:

figure 1 is a lateral view of the terminal portions of the rear chain loop, hooked to one another according to the teachings of the invention;

figure 2 is a perspective view of the detail of the rotatable-pivot hook associable with an end of the rigid portion of the rear chain loop as also illustrated in figure 5;

figure 3 is a view, in separated position, of the detail of the flattened body for the rapid coupling of the ends of the rear loop, as shown in hooked position in figure 1;

figure 4 is a sectional view of the detail of the flattened body with hooking head in inserted position according to figure 3;

figure 5 is a schematic view of a snow-chain according to the invention, mounted on a wheel of a motor vehicle and shown in a rear view;

figure 6 is a view of the terminal portions of the rigid rear loop of a snow chain, mutually coupled according to a different embodiment of the invention;

figure 7 is a perspective view of the flattened box-like body of the embodiment accoridng to fig. 6;

figure 8 is an exploded view of a further embodiment if the articulated mutual connection of the opposite ends of the two rigid half-loops;

figure 9 is a schematic view of the rear chain loop according to the embodiments shown in figs. 6-9 and mounted on a tired wheel; and

figure 10 is a perspective view of a further different embodiment of the coupling means for the box-like body of fig. 3.

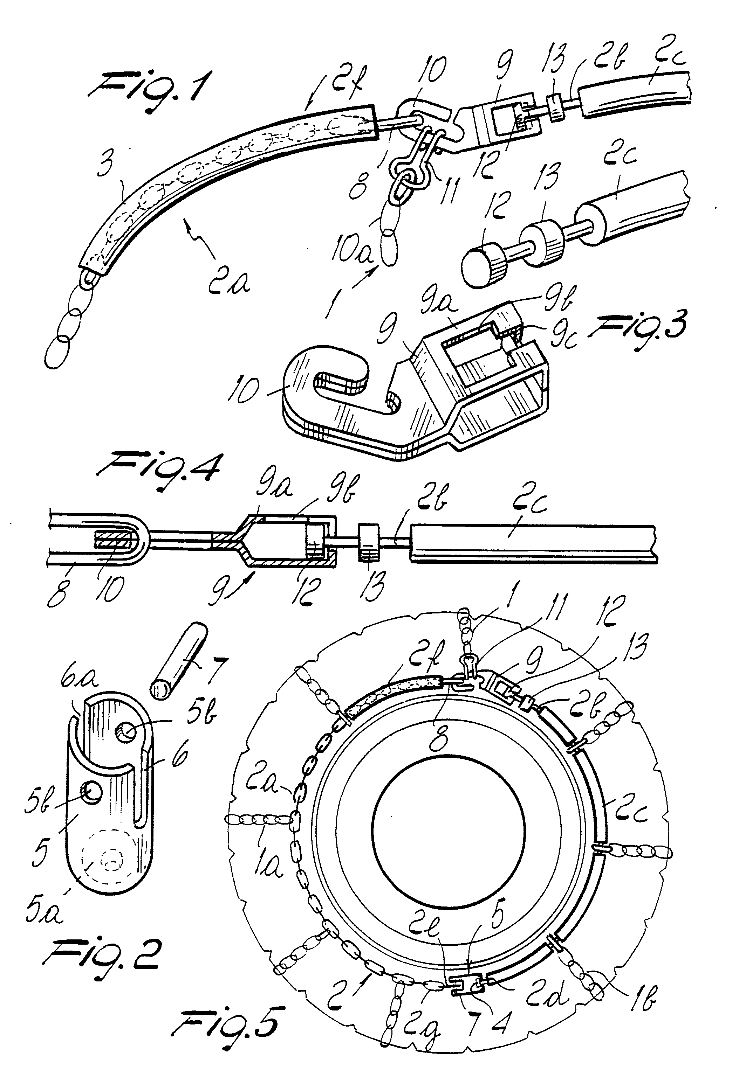

With reference to figures 1-5, the chain according to the first embodiment of the invention comprises a front open loop entirely of consecutive links (not shown, being of a known type), with link crosspieces 1-1a-1b, etc., also of a known type, and a rear open loop 2 including a link portion 2a, having a length equal to approximately two thirds of its total extension, and a rigid portion 2c formed by a steel cable sheathed by a tube of plastics or the like. The loop portion 2a entirely made of links has one end 2f thereof, connected to one end 2b of the rigid portion 2c, sheathed by a sufficiently rigid plastic sleeve 3.

According to the invention, the opposite end 2d of the rigid chain portion 2c has a conical head 4 which is rigidly fixed thereto and is mounted rotatable within a small hollow cylinder 5 having passage holes 5b and inner conical abutment 5a (figure 2). The cylinder 5 is then provided with two axial and diametrally counterposed splits or rectilinear notches 6-6a; a rigid pivot 7 extends through the holes 5b transversely to the longitudinal axis of the cylinder and engages the terminal link 2e of the end 2g of the chain portion 2a (figure 5).

The opposite notches 6-6a allow the link 2e to penetrate and rotate in the cylinder so as to adapt, in combination with the axial rotation of said cylinder, to the surface of the side of the tyre. Thus, the cylinder 5 and the entire link chain 2a can freely rotate about the conical head 4 rigidly associated with the rigid arc portion 2c.

A flattened box-like body 9 is hooked to the terminal link 8 of the end 2f of the link portion 2a and constitutes means for rapid coupling the ends 2f and 2b of the portions 2a and 2c. Said box-like body has a wide open hook 10, inserted in the link 8 and in the terminal links 10a of one or more crosspieces 1 by means of an ordinary U-shaped hook 11; the box-like body 9 has a face 9a provided with a wide quadrangular opening 9b open at 9c and in counterposed position with respect to the hook 10. A head 12, axially protruding from the end 2b of the rigid portion 2c, is removably and rapidly accommodatable inside said opening 9b; a cylindrical stop 13 on the same end 2b facilitates the entry of the head 12 in the cavity 9b. The head 12 is retained, against accidental slipping out of the body 9, below the two flaps which define between one another the inlet slot 9c.

Thus, the flattened shape of the box-like body 9, which tends to rest in a planar manner on the side of the tyre when the chain is placed on the wheel, facilitates the hooking of the head 12 even if said body 9 and the head 12 are not in a clearly visible position upon fitting.

The use of the chain structured according to this embodiment is in practice as follows:

after removing the chain from its packaging, it is sufficient to find the two stiffened portions 2f and 2c of the rear chain loop, then grip them with both hands, without bothering to try and somehow lay out the chain.

These portions are then lifted and widened, spacing them mutually apart almost until they are at the same height with respect to one another, thereby surprisingly obtaining a complete laying out of the chain in the vertical plane, with no entanglement. This is due, as already mentioned, to the fact that the rotatable pivot cylinder 5, under the weight of the front chain loop and of the crosspieces, freely rotates with respect to the rigid portion 2c of the rear loop and allows the crosspieces 1,1a to arrange themselves in a substantially vertical position, keeping the entire chain laid out. In this laid-out position, the chain can thus be rested in the usual manner on the tread of the wheel and then be easily hooked by introducing the head 12 in the body 9 and then be frontally tensioned in a known manner, by means of eccentric levers or of other systems.

The chain may be laid out without entanglement also by gripping with one hand a single portion of the rear loop and then also gripping the opposite portion to perform the application of the chain on the tyre.

According to a different embodiment of the invention, the rear loop may be instead formed by two rigid portions: this solution is particularly suitable for vehicles having a small free space behind the wheel.

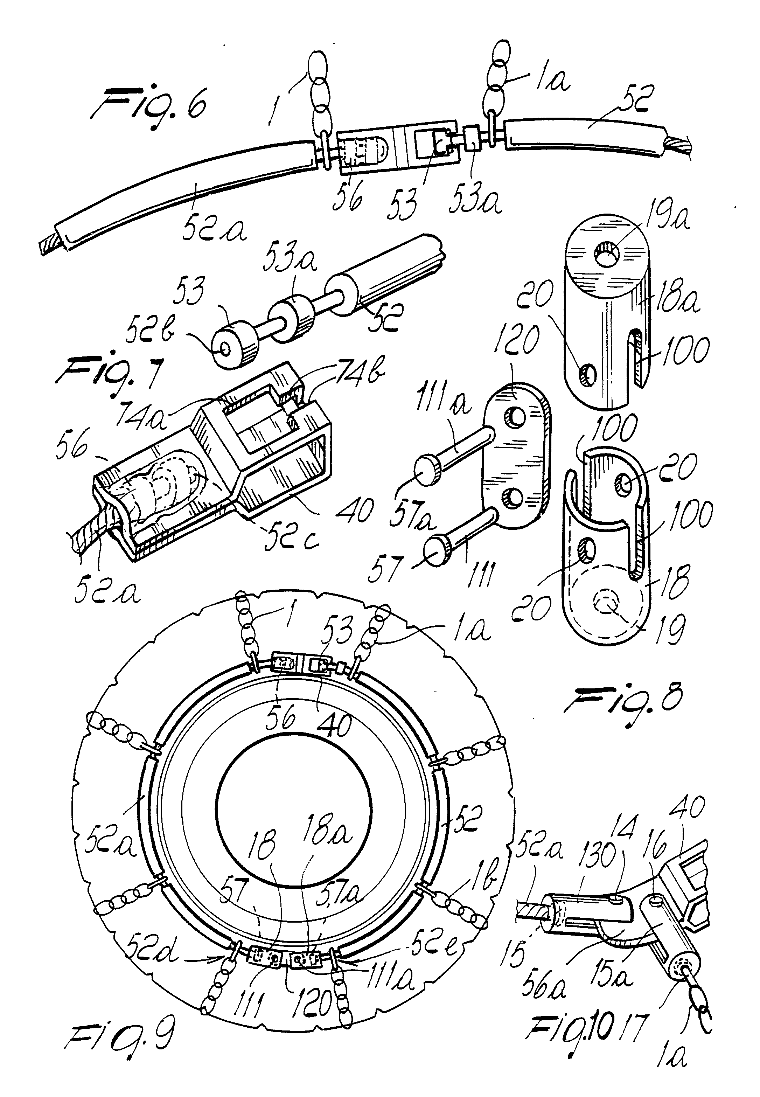

Thus, with reference to figs. 6 to 10, the chain now comprises a front open loop (not illustrated) entirely made of consecutive links, with crosspieces 1-1a-1b of a known type, and a rear open loop constituted by two rigid half-arcs 52,52a, constituted by a metal rod covered by a sheath of elastically yielding material such as plastics, rubber or the like.

The end 52b of the rigid half-arc 52 has a head 53 and, rearwardly thereto, a stop formation 53a; to the end 52c of the half-arc 52a there is rigidly coupled a flattened box-like body 40 with quadrangular opening 74a in one face and opening 74b in the front wall.

The end 52c is inserted in a sleeve-like cavity 56 rigidly associated with the box-like body 40 and is rigidly fixed by pressing the sleeve or by other suitable means.

Rearwardly with respect to the sleeve-like cavity 56 and to the stop formation 53a, two short rod portions are provided, free from covering and adapted to allow a stable retention of the two crosspieces, respectively 1 and 1a.

To the opposite ends 52d and 52e a concial head 57 and, respectively 57a are rigidly fixed (figure 9), said heads being rotatable within an own small hollow cylinder 18,18a, each cylinder being provided with conical passage holes 20 and an abutment hole 19, 19a (figure 8) for the respective conical head 57 and 57a. Each small cylinder is also provided with two axial and diametrically counterposed rectilinear notches or slots 100. Rigid pivots 111 and respectively 111a are passed through the holes 20 and extend transversely with respect to the longitudinal axes of the respective small cylinders 18 and 18a.

To the rigid pivots 111,111a, mutually parallel, there is coupled a small plate 120 (figures 8-9) oscillating about said pivots by virtue of the notches 100; the function of the plate 120 is to connect the two half-arcs 52,52a allowing their free and independent transverse rotation. In fact each half-arc can rotate longitudinally around the conical heads 57 and 57a and can also rotate in a direction perpendicular to the previous one around the pivots 18,18a which retain the connecting plate 120.

The chain according to this embodiment is mounted as described with reference to figs. 1-5.

To facilitate mounting and mutual coupling of the two rigid rear half-arcs, the box-like body 40 (figure 10) may have, instead of a sleeve-like cavity 56, a flattened stem 56a, rotatably connected to the rigid half-arc 52a by means of a small hollow cylinder 130 with opposite axial slots (like those 100 of the small cylinders), which is pivoted at 14 on the flat stem 56a and, at the opposite end, has a conical hole rotatably accommodating the end of the half-arc 52a; said end is retained by an also conical head 15.

The double possibility of relative rotation between the half-arc 52a and the box-like body 40 facilitates in practice positioning of said body 40 during mounting, also facilitating the coupling of the two rear half-arcs.

Furthermore, as again figure 10 shows, the crosspiece made of links 1a is connected to the flat stem 56a by means of a U-shaped band indicated at 15a, pivoted at 16 and connected to the first link of the crosspiece by means of a rotatable pivot 17.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A snow-chain for wheels of motor vehicles, comprising a tensionable open, front chain loop to be arranged on the outer side of the wheel, characterized in that the open rear chain loop (2) comprises a first and a second, at least partially rigid arc portions (2a,2c;52,52a), said first arc portion (2a;52a) having one end (2f) connected to a hollow box-like body (9;40) having an opening (9b;74a) for allowing the insertion and the removable hooking of a head (12;53) associated with one end of the second arc portion (2c;52) of the rear chain loop, said box-like body (9;40) being furthermore associated to at least one chain crosspiece (1) connecting the open rear loop to the front chain loop, the opposite ends (2g,2d;52d,52e) of said arc portions (2a,2c;52,52a) defining a tubular hook connection (5-7;18-20,111,111a,120) allowing, after gripping and widening of the ends of the rear chain loop, stretching of the chain in a plane and resting it on the tyre of the wheel without entanglement.

2. A snow-chain according to claim 1, characterized in that said first arc portion (2a) is made of links with said one end (2f) connected to the box-like body (9) being stiffened or sheathed with a substantially rigid sleeve (3), and said second arc portion (2c) comprises a cable of steel or the like.

3. A snow-chain according to any of claims 1 and 2, characterized in that said tubular hook connection comprises a hollow cylindrical body (5), having a bored bottom adapted to accommodate a head (4) associated with said opposite end (2d) of one (2c) of said arc portions, said hollow cylindrical body (5) being crossed by a transverse pivot (7) engaging in a link (2e) connected to the other (2a) of said arc portions, said cylindrical body with rotatable pivot being substantially diametrally opposite to said box-like body (9) in the mounted state of the chain.

4. A snow-chain according to one or more of the preceding claims, characterized in that said cylindrical body (5) has a central hole at said bottom and defines a conical inner surface (5a) for accommodating said head (4) having a corresponding conical shape, said head (4) being rigidly associated to said second arc portion (2c).

5. A chain according to any of claims 1-4, characterized in that said box-like body (9) has a flattened shape and is formed with a hook (10) engaged with a further link (8) connected to said one end (2f) of said first arc portion (2a), said hook being axially inclined with respect to the longitudinal middle axis of the box-like body so as to allow a correct orientation of the crosspieces (1) on the tread.

6. A snow-chain according to any of the preceding claims, characterized in that said link (2e) engaging in said pivot (7) and said further link (8) are the opposite terminal links of said first arc portion (2a).

7. A snow-chain according to any of claims 1,3-5, characterized in that said arc portions (52,52a) define two rigid half-arcs.

8. A snow-chain according to any of claims 1,2,5,7, characterized in that said tubular hook connection comprises two tubular hook bodies (18,18a) each pivotally connected to a respective opposite end (52d,52e) of said arc portions (52a,52), said tubular hook bodies being mutually and rotatably connected by at least one tension element (120).

9. A snow-chain according to any of claims 1,2,5,7,8, characterized in that said tension element comprises a small plate (120) the opposite ends whereof rotatably engage with fixed pivots (111,111a) extending transversely to the longitudinal axes of said tubular hook bodies (18,18a), so as to be able to penetrate into notches or slots (100) longitudinally provided in said tubular hook bodies with different inclinations.

10. A snow-chain according to any of claims 1-4,7-9, characterized in that said box-like body (40) has a flattened shape and is rotatably connected to said one end of said first arc portion (52a) by means of a tubular hook (130) having diametrally opposite axial slots for accommodating a flat stem element (56a) rigidly connected to the box-like body (40) and pivoted to the hook (130) through a transverse pivot (14), said stem element being further rotatably connected to the first link (17) of a crosspiece (1a).

0 291 771

Fig.1
Fig.2
Fig.3
Fig.4
Fig.5

Fig.6

Fig.7

Fig.8

Fig.9

Fig.10

European Patent Office

**EUROPEAN SEARCH REPORT**

Application Number

EP 88 10 7189

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 731 296 (MILZ) <br> * Page 4, line 24 - page 5, line 9; page 7, lines 3-23; figures 1,2,4 * <br> --- | 1,2,4 | B 60 C 27/06 |
| A | EP-A-0 081 792 (THIELE) <br> * Page 2, lines 17-22; page 6, line 11 - page 7, line 4; figure 2 * <br> --- | 1,2,5 | |
| A | EP-A-0 116 676 (ACCIAIERIE WEISSENFELS SPA) <br> * Page 1, lines 1-12; page 5, lines 18-36; page 8, lines 26-30; figures 1,7 * <br> ----- | 1,7 | |

| | | | TECHNICAL FIELDS SEARCHED (Int. Cl.4) |
|---|---|---|---|
| | | | B 60 C |

The present search report has been drawn up for all claims

| Place of search | Date of completion of the search | Examiner |
|---|---|---|
| THE HAGUE | 14-09-1988 | TOPP-BORN S. |

EPO FORM 1503 03.82 (P0401)